# FASCICULE DE BREVET EUROPEEN

(11) **EP 4 332 352 B1**
(45) Date de publication et mention de la délivrance du brevet: **24.06.2026**
(21) Numéro de dépôt: 23193700.4
(22) Date de dépôt: 28.08.2023
(51) Int. Cl.: F01D 21/04, B64D 27/00, B64D 45/00, B64D 37/32, F02C 3/22, B64D 37/30

(54) **ENSEMBLE PROPULSIF POUR AÉRONEF**
ANTRIEBSEINHEIT FÜR EIN FLUGZEUG
PROPULSION ASSEMBLY FOR AIRCRAFT

(30) Priorité: 30.08.2022 FR 2208674
(43) Date de publication de la demande: 06.03.2024
(73) Titulaire: AIRBUS OPERATIONS, 31060 Toulouse Cedex 9 (FR)
(72) Inventeur: CZAPLA, Lionel, 31060 TOULOUSE (FR); VARDELLE, Emmanuel, 31060 TOULOUSE (FR)
(74) Mandataire: Cabinet Le Guen Maillet

(56) Documents cités:
- DE-A1- 2 413 507
- GB-A- 1 453 873
- US-A1- 2005 025 615
- US-A1- 2008 073 460
- US-A1- 2012 082 541
- US-A1- 2017 198 604
- US-A1- 2018 283 204
- US-A1- 2018 320 633

## Description

### DOMAINE TECHNIQUE

La présente invention concerne un ensemble propulsif pour un aéronef, ledit ensemble propulsif comprenant un châssis fixé à une structure d'une voilure de l'aéronef, un système de motorisation à simple flux tel qu'un turbopropulseur, fixé au châssis, une canalisation de dihydrogène qui alimente la chambre de combustion du système de motorisation avec ledit dihydrogène et un cylindre de protection fixé autour du châssis entre la canalisation de dihydrogène et la turbine du système de motorisation. L'invention concerne également un aéronef comportant au moins un tel ensemble propulsif.

### ÉTAT DE LA TECHNIQUE ANTÉRIEURE

Afin de se déplacer, un aéronef comporte classiquement au moins un ensemble propulsif comprenant un système de motorisation à simple flux tel qu'un turbopropulseur. Un tel système de motorisation comporte un noyau qui est enfermé dans un carter et qui comporte, entre autres, de l'amont vers l'aval, un compresseur, une chambre de combustion et une turbine. Selon le cas, le système de motorisation comporte également une soufflante ou une hélice entraînée en rotation par le noyau. Le compresseur et la turbine possèdent chacun des aubes qui sont fixées à un arbre rotatif. L'ensemble propulsif comporte également un châssis qui est fixé à une structure de l'aile de l'aéronef et constitue ainsi un mât d'accrochage sous l'aile.

Pour limiter la pollution due à l'utilisation de kérosène, il est envisagé d'utiliser le dihydrogène comme carburant dans la chambre de combustion.

Ce dihydrogène est amené depuis un réservoir jusqu'à la chambre de combustion par une canalisation de dihydrogène qui s'étend au moins en partie dans l'ensemble propulsif. Du fait de la structure de l'ensemble propulsif et de sa position sous l'aile et sur l'avant de l'aile, la canalisation de dihydrogène traverse le châssis en provenant de l'aile et court ainsi de l'arrière vers l'avant jusqu'à la chambre de combustion.

Pour limiter l'impact de la température du noyau sur la canalisation de dihydrogène, celle-ci court à l'extérieur du carter pour rejoindre la chambre de combustion à travers le carter.

En cas d'incident sur le système de motorisation, il peut arriver que certaines aubes de la turbine ou du compresseur se détachent de l'arbre et, du fait de leur vitesse, traversent le carter au risque de couper la canalisation de dihydrogène.

Les documents DE-A-24 13 507, US-A-2017/198604, GB-A-1 453 873 et US-A-2005/025615 divulguent des ensembles propulsifs de l'état de la technique.

### EXPOSÉ DE L'INVENTION

Un objet de la présente invention est de proposer un ensemble propulsif qui comporte des moyens de protection permettant de protéger une canalisation de dihydrogène passant au voisinage des aubes de la turbine du système de motorisation à simple flux.

À cet effet, est proposé un ensemble propulsif pour un aéronef comportant :
- un châssis,
- un système de motorisation fixé au châssis et comportant un noyau enfermé dans un carter et comportant une chambre de combustion et une turbine munie d'aubes rotatives autour d'un axe longitudinal, et
- une canalisation d'alimentation destinée à acheminer du dihydrogène jusqu'à la chambre de combustion où la canalisation d'alimentation serpente à l'extérieur du carter en regard de la turbine avant de plonger dans la chambre de combustion à travers le carter,
   ledit ensemble propulsif étant caractérisé en ce qu'il comporte en outre
- un cylindre de protection fixé au châssis ou au carter par des moyens de fixation et disposé autour du carter et entre la canalisation d'alimentation et la turbine, en ce que les moyens de fixation comportent un système de fixation avant arrangé au niveau d'une partie avant du cylindre de protection et deux systèmes de fixation latérale disposés de part et d'autre d'un plan médian vertical de l'ensemble propulsif, en ce que le système de fixation avant comporte une bielle avant fixée de manière articulée par un premier point de liaison au carter au niveau du plan médian et par un deuxième point de liaison au cylindre de protection au niveau du plan médian, et en ce que chaque système de fixation latérale comporte une bielle latérale fixée de manière articulée par un premier point de liaison au cylindre de protection et par deux deuxièmes points de liaison au carter. L'invention propose également un ensemble propulsif pour un aéronef comportant :
- un châssis,
- un système de motorisation fixé au châssis et comportant un noyau enfermé dans un carter et comportant une chambre de combustion et une turbine munie d'aubes rotatives autour d'un axe longitudinal, et
- une canalisation d'alimentation destinée à acheminer du dihydrogène jusqu'à la chambre de combustion où la canalisation d'alimentation serpente à l'extérieur du carter en regard de la turbine avant de plonger dans la chambre de combustion à travers le carter,
ledit ensemble propulsif étant caractérisé en ce qu'il comporte en outre un cylindre de protection fixé au châssis ou au carter par des moyens de fixation et disposé autour du carter et entre la canalisation d'alimentation et la turbine, en ce que les moyens de fixation comportent un système de fixation avant arrangé au niveau d'une partie avant du cylindre de protection et deux systèmes de fixation latérale disposés de part et d'autre d'un plan médian vertical de l'ensemble propulsif, en ce que le système de fixation avant comporte une bielle avant fixée de manière articulée par un premier point de liaison au châssis au niveau du plan médian et par un deuxième point de liaison au cylindre de protection au niveau du plan médian, et en ce que chaque système de fixation latérale comporte une bielle latérale fixée de manière articulée par un premier point de liaison au châssis et par deux deuxièmes points de liaison au cylindre de protection.

Avec un tel arrangement, une aube de la turbine qui se détacherait rencontrera le cylindre de protection qui lui barre le chemin vers la canalisation de dihydrogène et elle sera alors déviée ou arrêtée.

Avantageusement, le cylindre de protection est constitué d'au moins deux portions de cylindre creux fixées les unes aux autres par des systèmes de solidarisation, le cylindre de protection est constitué d'un demi-cylindre supérieur et de plusieurs demi-cylindres inférieurs fixés au demi-cylindre supérieur par des systèmes de solidarisation et deux demi-cylindres inférieurs voisins sont distants l'un de l'autre parallèlement à l'axe longitudinal.

Avantageusement, une extrémité avant du cylindre de protection est positionnée, perpendiculairement à l'axe longitudinal, au moins au niveau des aubes de la turbine qui sont les plus en avant, et l'extrémité arrière du cylindre de protection est positionnée, perpendiculairement à l'axe longitudinal, au moins au niveau des aubes de la turbine qui sont les plus en arrière. Avantageusement, le cylindre de protection dépasse en avant des aubes de la turbine qui sont les plus en avant et en arrière des aubes de la turbine qui sont les plus en arrière.

L'invention propose également un aéronef comportant une aile, un réservoir de dihydrogène et au moins un ensemble propulsif selon l'une des variantes précédentes où le châssis est fixé à l'aile et où la canalisation d'alimentation est fluidiquement connectée au réservoir de dihydrogène.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef comportant un ensemble propulsif selon l'invention,
Fig. 2 est une représentation schématique de côté et en coupe d'un système de motorisation de l'ensemble propulsif selon l'invention,
Fig. 3 est une représentation schématique en coupe selon la ligne III-III d'un ensemble propulsif selon une première variante de réalisation de l'invention,
Fig. 4 est une vue en coupe selon la ligne IV-IV de l'ensemble propulsif de la Fig. 3,
Fig. 5 est une vue similaire à la Fig. 3 pour un ensemble propulsif selon une deuxième variante de réalisation de l'invention,
Fig. 6 est une vue de côté de l'ensemble propulsif de la Fig. 5,
Fig. 7 est une représentation schématique de côté et en coupe d'un ensemble propulsif,
Fig. 8 est une vue similaire à la Fig. 3 pour un ensemble propulsif selon l'invention avec un cylindre de protection particulier,
Fig. 9 est une vue de côté d'un ensemble propulsif selon l'invention avec un cylindre de protection particulier, et
Fig. 10 est une vue d'un détail de moyens de fixation.

### EXPOSÉ DÉTAILLÉ DE MODES DE RÉALISATION

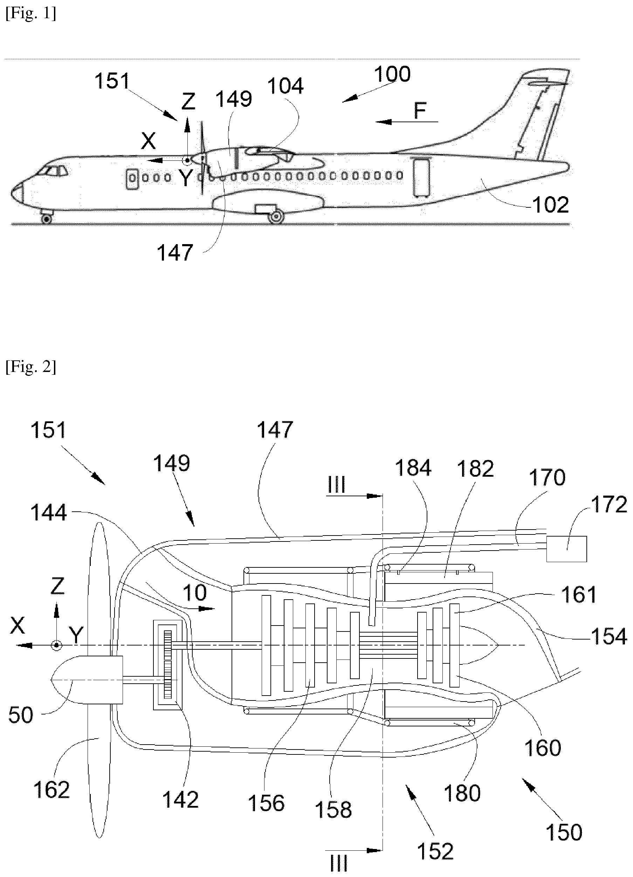

Dans la description qui suit, les termes relatifs à une position sont pris en référence à un aéronef en position d'avancement, c'est-à-dire comme il est représenté sur la Fig. 1 où la flèche F montre la direction d'avancement de l'aéronef.

Dans la description qui suit, et par convention, on appelle X l'axe longitudinal du système de motorisation qui est parallèle à l'axe longitudinal de l'aéronef orienté positivement vers l'avant dans le sens d'avancement de l'aéronef, on appelle Y l'axe transversal qui est horizontal lorsque l'aéronef est au sol, et Z l'axe vertical ou hauteur verticale lorsque l'aéronef est au sol, ces trois axes X, Y et Z étant orthogonaux entre eux.

La Fig. 1 montre un aéronef 100 qui présente un fuselage 102 de part et d'autre duquel est fixée une aile 104. Sous chaque aile 104 est fixé au moins un ensemble propulsif 151 qui comporte une nacelle 149 constituée de capots 147 formant une surface extérieure aérodynamique.

La Fig. 2 montre l'ensemble propulsif 151 qui comporte également un système de motorisation 150 qui est représenté de manière schématique. L'ensemble propulsif 151 comporte un châssis 180 qui assure la fixation de l'ensemble propulsif 151 à une structure de l'aile 104 et constitue un mât d'accrochage. Dans le mode de réalisation de l'invention présenté à la Fig. 2, le châssis 180 prend la forme d'une cage constituée, entre autres, de poutres fixées les unes aux autres. Le châssis 180 est fixé à la structure de l'aile par des moyens de fixation connus de l'homme du métier.

Dans le mode de réalisation de l'invention présenté à la Fig. 2, le système de motorisation 150 est un turbopropulseur qui comporte un noyau 152 qui est enfermé dans un carter 154. Dans le mode de réalisation de l'invention présenté à la Fig. 2, le carter 154 est logé à l'intérieur du châssis 180 formant une cage et il y est fixé par tous moyens appropriés connus de l'homme du métier.

De l'air extérieur pénètre dans la nacelle 149 à travers une ouverture 144 prévue dans les capots 147 à l'avant de la nacelle 149.

À l'intérieur de la nacelle 149, le flux d'air primaire 10 pénètre dans le noyau 152 pour alimenter la chambre de combustion 158 en dioxygène.

Le carter 154 est ainsi ouvert à l'avant pour permettre l'introduction du flux primaire 10 dans le noyau 152 et ouvert à l'arrière pour permettre l'échappement des gaz issus de la combustion à travers une tuyère. Le noyau 152 comporte de l'amont vers l'aval, un compresseur 156, une chambre de combustion 158 et une turbine 160. Le compresseur 156 et la turbine 160 sont munis d'aubes 161 rotatives autour de l'axe longitudinal X.

Le flux primaire 10 passe ainsi successivement à travers le compresseur 156 où il est comprimé avant d'être injecté dans la chambre de combustion 158 où il est mélangé au carburant. Les gaz issus de la combustion passent ensuite à travers la turbine 160 et l'entraînent en rotation. La turbine 160 entraîne alors à son tour le compresseur 156 en rotation et les gaz sont ensuite éjectés à l'arrière.

Dans le cas d'un turbopropulseur, le système de motorisation 150 comporte une hélice 162 qui est à l'avant et entraînée en rotation par la turbine 160. Dans le mode de réalisation de l'invention présenté ici, le système de motorisation 150 comporte également une boîte de vitesse 142 montée entre la turbine 160 et l'hélice 162 qui tourne autour d'un axe de rotation 50 parallèle à l'axe longitudinal X et qui est ici décalé par rapport à l'axe longitudinal X.

D'une manière générale, l'objet de l'invention est appliqué à un système de motorisation 150 avec un flux primaire 10 à l'intérieur du noyau 152.

L'ensemble propulsif 151 comporte également une canalisation d'alimentation 170 qui permet d'acheminer du dihydrogène comme carburant jusqu'à la chambre de combustion 158 en étant fluidiquement connectée à un réservoir de dihydrogène 172 de l'aéronef 100. La canalisation d'alimentation 170 serpente ainsi depuis l'arrière de la nacelle 149 à l'extérieur du carter 154 en passant ainsi en regard et au large de la turbine 160 avant de plonger dans la chambre de combustion 158 à travers le carter 154.

En cas d'incident sur le système de motorisation 150, il peut arriver que les aubes 161 de la turbine 160 se détachent et traversent le carter 154. Pour protéger la canalisation d'alimentation 170, l'ensemble propulsif 151 comporte un cylindre de protection 182 qui est fixé au châssis 180 par des moyens de fixation 184 et il est disposé autour du carter 154 et entre la canalisation d'alimentation 170 et la turbine 160. L'axe du cylindre de protection 182 est globalement coaxial avec l'axe longitudinal X.

Selon un autre mode de réalisation, le cylindre de protection 182 est fixé au carter 154 par des moyens de fixation.

L'extrémité avant du cylindre de protection 182 est positionnée, perpendiculairement à l'axe longitudinal X, au moins au niveau des aubes 161 de la turbine 160 qui sont les plus en avant, et l'extrémité arrière du cylindre de protection 182 est positionnée, perpendiculairement à l'axe longitudinal X, au moins au niveau des aubes 161 de la turbine 160 qui sont les plus en arrière. Ainsi, en cas de détachement d'une aube 161 de la turbine 160, ladite aube 161 va entrer en collision avec le cylindre de protection 182 et son trajet va être interrompu avant qu'elle n'atteigne la canalisation d'alimentation 170.

En cas de détachement, une aube 161 de la turbine 160 peut partir radialement par rapport à l'axe longitudinal X, mais il peut y avoir une certaine dispersion et elle peut partir vers l'avant ou l'arrière. Ainsi, il est préférable d'allonger le cylindre de protection 182 au-delà des aubes 161 de la turbine 160 pour prendre en compte les risques de dispersion. Ainsi, il est préférable que le cylindre de protection 182 dépasse en avant des aubes 161 de la turbine 160 qui sont les plus en avant et en arrière des aubes 161 de la turbine 160 qui sont les plus en arrière.

Du fait de la position de la canalisation d'alimentation 170 qui est à l'arrière par rapport à la chambre de combustion 158, ladite canalisation d'alimentation 170 ne se trouve jamais en regard du compresseur 156 et il n'est donc pas nécessaire de placer une plaque de protection. Bien sûr, si dans une autre configuration la canalisation d'alimentation 170 se trouve en regard du compresseur 156, un cylindre de protection similaire peut être mis en place.

Du fait de l'encombrement en partie basse du châssis 180 où le carter 154 est logé, la canalisation d'alimentation 170 s'étend préférentiellement en partie haute dudit châssis 180 et donc au-dessus du carter 154.

La mise en place d'un cylindre de protection 182 autour du carter 154 permet, même en cas de rupture des moyens de fixation, de maintenir le cylindre de protection 182 autour du carter 154 afin qu'il serve encore de protection à la canalisation d'alimentation 170.

Le cylindre de protection 182 est réalisé par exemple en un alliage de titane avec une résistance spécifique élevée comme l'alliage connu sous l'appellation Ti-6Al-4V et présente par exemple une
épaisseur de l'ordre de 30 mm.

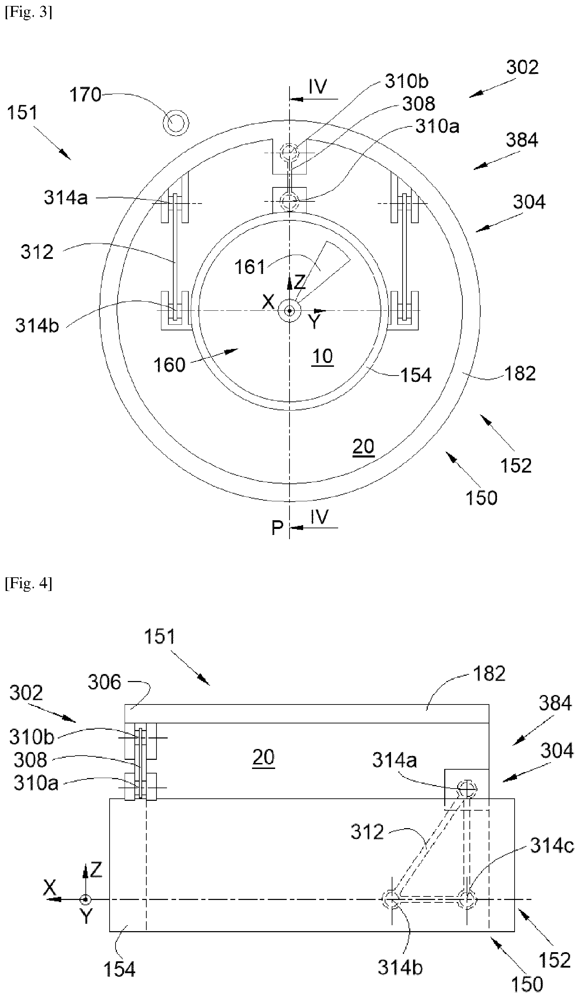

La Fig. 3 et la Fig. 4 montrent une première variante de l'invention où le cylindre de protection 182 est fixé au carter 154 par des moyens de fixation 384.

Les moyens de fixation 384 comportent un système de fixation avant 302 et deux systèmes de fixation latérale 304. Le système de fixation avant 302 est arrangé au niveau d'une partie avant 306 du cylindre de protection 182 et les systèmes de fixation latérale 304 sont disposés de part et d'autre du plan médian vertical P (XZ) de l'ensemble propulsif 151 et à l'arrière de la partie avant 306.

Le système de fixation avant 302 comporte une bielle avant 308 fixée de manière articulée par un premier point de liaison 310a au carter 154 au niveau du plan médian P et par un deuxième point de liaison 310b au cylindre de protection 182 au niveau du plan médian P. Le premier point de liaison 310a est au-dessous du deuxième point de liaison 310b.

La bielle avant 308 est inscrite dans un plan perpendiculaire à l'axe longitudinal X.

Chaque système de fixation latérale 304 comporte une bielle latérale 312 fixée de manière articulée par un premier point de liaison 314a au cylindre de protection 182 et par deux deuxièmes points de liaison 314b-c au carter 154 où les trois points de liaison 314a-c de chaque système de fixation latérale 304 sont disposés dans un plan parallèle au plan médian P. Le premier point de liaison 314a est au-dessus des deuxièmes points de liaison 314b-c.

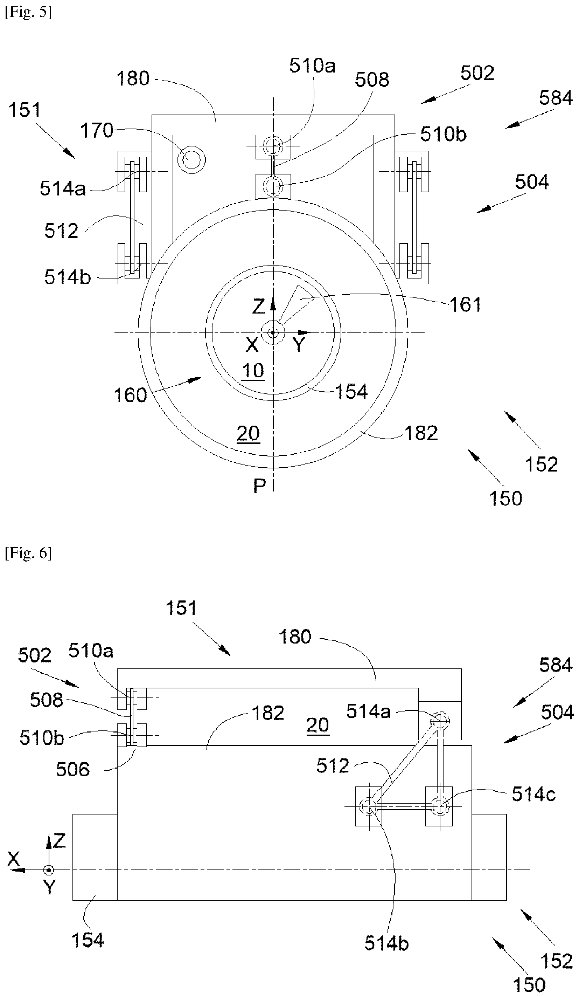

La Fig. 5 et la Fig. 6 montrent une deuxième variante de l'invention où le cylindre de protection 182 est fixé au châssis 180 par des moyens de fixation 584.

Les moyens de fixation 584 comportent un système de fixation avant 502 et deux systèmes de fixation latérale 504. Le système de fixation avant 502 est arrangé au niveau d'une partie avant 506 du cylindre de protection 182 et les systèmes de fixation latérale 504 sont disposés de part et d'autre du plan médian vertical P (XZ) de l'ensemble propulsif 151 et à l'arrière de la partie avant 506.

Le système de fixation avant 502 comporte une bielle avant 508 fixée de manière articulée par un premier point de liaison 510a au châssis 180 au niveau du plan médian P et par un deuxième point de liaison 510b au cylindre de protection 182 au niveau du plan médian P. Le premier point de liaison 510a est au-dessus du deuxième point de liaison 510b.

La bielle avant 508 est inscrite dans un plan perpendiculaire à l'axe longitudinal X.

Chaque système de fixation latérale 504 comporte une bielle latérale 512 fixée de manière articulée par un premier point de liaison 514a au châssis 180 et par deux deuxièmes points de liaison 514b-c au cylindre de protection 182 où les trois points de liaison 514a-c de chaque système de fixation latérale 504 sont disposés dans un plan parallèle au plan médian P. Le premier point de liaison 514a est au-dessus des deuxièmes points de liaison 514b-c.

Chaque point de liaison des modes de réalisation des Figs. 3 à 6 réalise au moins une liaison pivot, les axes des points de liaison 310a-b et 510a-b des systèmes de fixation avant 302 et 502 sont parallèles à l'axe longitudinal X et les axes des points de liaison 314a-c et 514a-c des systèmes de fixation latérale 304 et 504 sont parallèles à l'axe transversal Y.

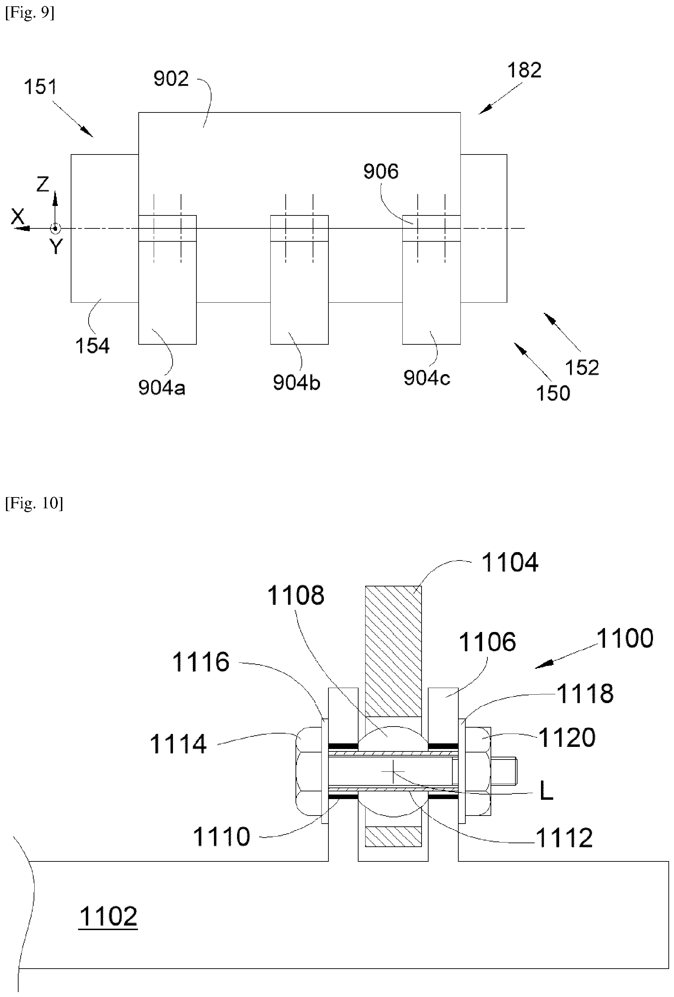

Mais préférentiellement, chaque point de liaison réalise une liaison rotule dont un mode de réalisation est montré à la Fig. 10.

La Fig. 10 montre un détail de chaque point de liaison 1100 entre un premier élément 1102 et un deuxième élément 1104. Le premier élément 1102 peut être le châssis 180, le carter 154 ou le cylindre de protection 182 et le deuxième élément 1104 est une bielle.

Le premier élément 1102 comporte une chape à deux branches 1106 entre lesquelles est arrangé un palier à rotule 1108 solidaire du second élément 1104. Chaque branche est percée d'un alésage dans lequel est inséré un manchon d'extrémité 1110. Un axe d'articulation 1112 se présentant sous la forme d'un fût cylindrique creux est, d'une part emmanché glissant dans chacun des manchons d'extrémité 1110, et d'autre part emmanché en force dans un alésage réalisé dans le palier à rotule 1108 afin de permettre un pivotement du palier à rotule 1108 par rapport à la chape autour d'un axe de liaison L.

D'un côté de la chape, une vis 1114 est insérée dans l'axe d'articulation 1112 et une première rondelle plate de blocage 1116 est emmanchée sur la tige de la vis 1114 et intercalée entre la tête de la vis 1114 et un manchon d'extrémité 1110, et de l'autre côté de la chape, une seconde rondelle plate de blocage 1118 est emmanchée sur la tige de la vis 1114 et intercalée entre l'autre manchon d'extrémité 1110 et une extrémité filetée de la vis où un écrou de serrage 1120 est serré au couple souhaité sur l'extrémité filetée de la vis 1114 pour venir contre la seconde rondelle plate de blocage 1118 et maintenir les rondelles 1116 et 1118 plaquées contre les manchons d'extrémités 1110. L'assemblage des deux éléments l'un à l'autre est finalisé par l'immobilisation axiale, le long de l'axe de liaison L, des manchons d'extrémité 1110 et du palier à rotule 1108. Cette immobilisation est obtenue du fait du compactage entre l'écrou de serrage 1120 au contact de la seconde rondelle de blocage 1118 et de la tête de la vis 1114 au contact de la première rondelle de blocage 1116.

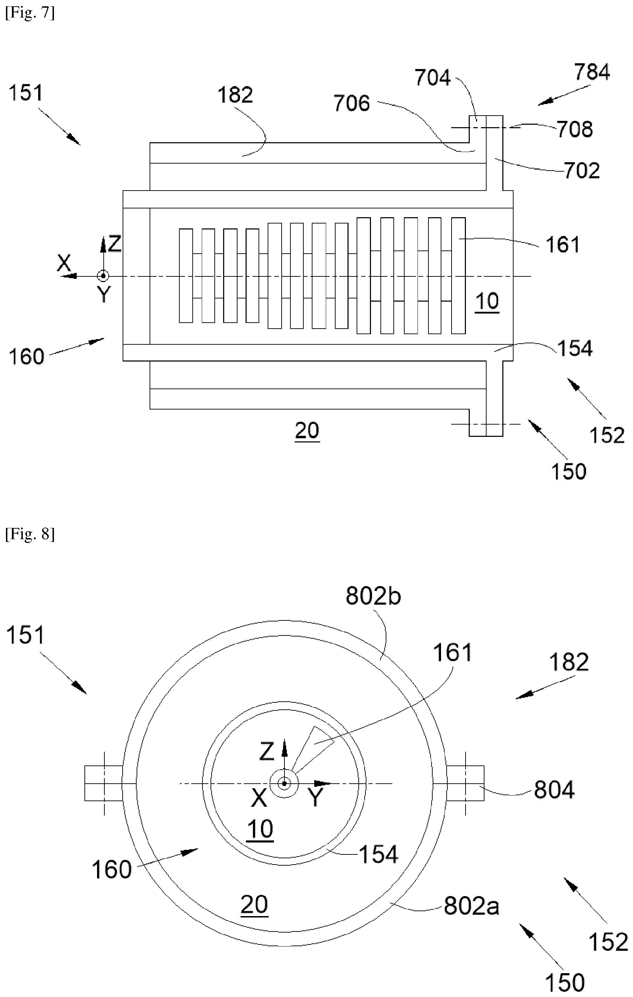

La Fig. 7 montre un mode de réalisation non revendiqué où le cylindre de protection 182 est fixé au châssis 180 par des moyens de fixation 784.

Les moyens de fixation 784 comportent une bride extérieure 702 et une bride intérieure 704.

Sur la Fig. 7, les brides 702 et 704 sont arrangées au niveau d'une partie arrière 706 du cylindre de protection 182. Mais selon un autre mode de réalisation de l'invention non représenté, elles sont disposées au niveau d'une partie avant du cylindre de protection 182. Dans un autre mode de réalisation non représenté, un couple de bride 702,704 est arrangé au niveau d'une partie arrière 706 du cylindre de protection, et un autre couple de bride 702,704 est arrangé au niveau d'une partie avant du cylindre de protection 182.

La bride extérieure 702 est solidaire du carter 154 et la bride intérieure 704 est solidaire du cylindre de protection 182.

Le cylindre de protection 182 est autour du carter 154 et la bride intérieure 704 est en appui sur une face avant de la bride extérieure 702. Les moyens de fixation 784 comportent des éléments de fixation 708 qui fixent les deux brides 702 et 704 l'une contre l'autre. Les éléments de fixation 708 sont par exemple des boulons.

Dans les variantes présentées ci-dessus, le cylindre de protection 182 est constitué d'un seul élément mais il peut être constitué de plusieurs éléments fixés les uns aux autres.

Ainsi, dans le mode de réalisation de l'invention présenté à la Fig. 8, le cylindre de protection 182 est constitué d'au moins deux portions 802a-b de cylindre creux fixées les unes aux autres par des systèmes de solidarisation 804.

Dans le mode de réalisation de l'invention présenté à la Fig. 8, il y a deux demi-cylindres 802a-b et les systèmes de solidarisation 804 sont ici des nervures longitudinales fixées par des boulons. Ce mode de réalisation peut s'appliquer à toutes les variantes décrites ci-dessus. Sur la Fig. 8, les moyens de fixation 184 ne sont pas représentés, mais ils peuvent prendre la forme de ceux décrits ci-dessus.

Comme représenté à la Fig. 9, pour alléger le cylindre de protection 182, celui-ci est constitué d'un demi-cylindre supérieur 902 et de plusieurs demi-cylindres inférieurs 904a-c, ici au nombre de trois, qui sont tous coaxiaux. Le demi-cylindre supérieur 902 est plein et entier sur toute sa longueur pour servir de protection à la canalisation d'alimentation 170 qui est au-dessus. Les demi-cylindres inférieurs 904a-c s'étendent parallèlement à la direction longitudinale X sur des longueurs réduites et chaque demi-cylindre inférieur 904a-c est fixé au demi-cylindre supérieur 902 par des systèmes de solidarisation 906, comme par exemple ici des nervures longitudinales fixées par des boulons et il y a des espaces vides entre deux demi-cylindres inférieurs 904a-c consécutifs. Deux demi-cylindres inférieurs 904a-c voisins sont distants l'un de l'autre parallèlement à l'axe longitudinal X. Ce mode de réalisation peut s'appliquer à toutes les variantes décrites ci-dessus. Sur la Fig. 9, les moyens de fixation 184 ne sont pas représentés, mais ils peuvent prendre la forme de ceux décrits ci-dessus.

## Revendications

1. Ensemble propulsif (151) pour un aéronef (100) comportant :
- un châssis (180),
- un système de motorisation (150) fixé au châssis (180) et comportant un noyau (152) enfermé dans un carter (154) et comportant une chambre de combustion (158) et une turbine (160) munie d'aubes (161) rotatives autour d'un axe longitudinal (X),
- une canalisation d'alimentation (170) destinée à acheminer du dihydrogène jusqu'à la chambre de combustion (158) où la canalisation d'alimentation (170) serpente à l'extérieur du carter (154) en regard de la turbine (160) avant de plonger dans la chambre de combustion (158) à travers le carter (154),
ledit ensemble propulsif (151) étant **caractérisé en ce qu'**il comporte en outre un cylindre de protection (182) fixé au carter (154) par des moyens de fixation (384) et disposé autour du carter (154) et entre la canalisation d'alimentation (170) et la turbine (160), **en ce que** les moyens de fixation (384) comportent un système de fixation avant (302) arrangé au niveau d'une partie avant (306) du cylindre de protection (182) et deux systèmes de fixation latérale (304) disposés de part et d'autre d'un plan médian vertical (P) de l'ensemble propulsif (151), **en ce que** le système de fixation avant (302) comporte une bielle avant (308) fixée de manière articulée par un premier point de liaison (310a) au carter (154) au niveau du plan médian (P) et par un deuxième point de liaison (310b) au cylindre de protection (182) au niveau du plan médian (P), et **en ce que** chaque système de fixation latérale (304) comporte une bielle latérale (312) fixée de manière articulée par un premier point de liaison (314a) au cylindre de protection (182) et par deux deuxièmes points de liaison (314b-c) au carter (154).

2. Ensemble propulsif (151) pour un aéronef (100) comportant :
- un châssis (180),
- un système de motorisation (150) fixé au châssis (180) et comportant un noyau (152) enfermé dans un carter (154) et comportant une chambre de combustion (158) et une turbine (160) munie d'aubes (161) rotatives autour d'un axe longitudinal (X), et
- une canalisation d'alimentation (170) destinée à acheminer du dihydrogène jusqu'à la chambre de combustion (158) où la canalisation d'alimentation (170) serpente à l'extérieur du carter (154) en regard de la turbine (160) avant de plonger dans la chambre de combustion (158) à travers le carter (154),
ledit ensemble propulsif (151) étant **caractérisé en ce qu'**il comporte en outre un cylindre de protection (182) fixé au châssis (180)par des moyens de fixation (584) et disposé autour du carter (154) et entre la canalisation d'alimentation (170) et la turbine (160), **en ce que** les moyens de fixation (584) comportent un système de fixation avant (502) arrangé au niveau d'une partie avant (506) du cylindre de protection (182) et deux systèmes de fixation latérale (504) disposés de part et d'autre d'un plan médian vertical (P) de l'ensemble propulsif (151), **en ce que** le système de fixation avant (502) comporte une bielle avant (508) fixée de manière articulée par un premier point de liaison (510a) au châssis (180) au niveau du plan médian (P) et par un deuxième point de liaison (510b) au cylindre de protection (182) au niveau du plan médian (P), et **en ce que** chaque système de fixation latérale (504) comporte une bielle latérale (512) fixée de manière articulée par un premier point de liaison (514a) au châssis (180) et par deux deuxièmes points de liaison (514b-c) au cylindre de protection (182).

3. Ensemble propulsif (151) pour un aéronef (100) selon l'une des revendications 1 ou 2 **caractérisé en ce que** le cylindre de protection (182) est constitué d'au moins deux portions (902, 904a-c) de cylindre creux fixées les unes aux autres par des systèmes de solidarisation (906), **en ce que** le cylindre de protection (182) est constitué d'un demi-cylindre supérieur (902) et de plusieurs demi-cylindres inférieurs (904a-c) fixés au demi-cylindre supérieur (902) par des systèmes de solidarisation (906) et **en ce que** deux demi-cylindres inférieurs (904a-c) voisins sont distants l'un de l'autre parallèlement à l'axe longitudinal (X).

4. Ensemble propulsif (151) selon l'une des revendications 1 à 3, **caractérisé en ce qu'**une extrémité avant du cylindre de protection (182) est positionnée, perpendiculairement à l'axe longitudinal (X), au moins au niveau des aubes (161) de la turbine (160) qui sont les plus en avant, et l'extrémité arrière du cylindre de protection (182) est positionnée, perpendiculairement à l'axe longitudinal (X), au moins au niveau des aubes (161) de la turbine (160) qui sont les plus en arrière.

5. Ensemble propulsif (151) selon la revendication 4, **caractérisé en ce que** le cylindre de protection (182) dépasse en avant des aubes (161) de la turbine (160) qui sont les plus en avant et en arrière des aubes (161) de la turbine (160) qui sont les plus en arrière.

6. Aéronef (100) comportant une aile (104), un réservoir de dihydrogène (172) et au moins un ensemble propulsif (151) selon l'une des revendications précédentes où le châssis (180) est fixé à l'aile (104) et où la canalisation d'alimentation (170) est fluidiquement connectée au réservoir de dihydrogène (172).

## Patentansprüche

1. Antriebseinheit (151) für ein Luftfahrzeug (100), umfassend:
- einen Rahmen (180),
- ein Motorisierungssystem (150), das an dem Rahmen (180) befestigt ist und einen Kern (152) aufweist, der in einem Gehäuse (154) eingeschlossen ist und eine Brennkammer (158) und eine Turbine (160), die über um eine Längsachse (X) drehende Schaufeln (161) verfügt, umfasst,
- eine Versorgungsleitung (170), die dazu bestimmt ist, Wasserstoff bis zu der Brennkammer (158) zu leiten, wobei sich die Versorgungsleitung (170) außerhalb des Gehäuses (154) gegenüber der Turbine (160) schlängelt, bevor sie durch das Gehäuse (154) hindurch in die Brennkammer (158) eintritt,
wobei die Antriebseinheit (151) **dadurch gekennzeichnet ist, dass** sie ferner einen Schutzzylinder (182) umfasst, der an dem Gehäuse (154) durch Befestigungsmittel (384) befestigt ist und um das Gehäuse (154) herum und zwischen der Versorgungsleitung (170) und der Turbine (160) angeordnet ist, dass die Befestigungsmittel (384) ein vorderes Befestigungssystem (302), das an einem vorderen Teil (306) des Schutzzylinders (182) angeordnet ist, und zwei seitliche Befestigungssysteme (304), die zu beiden Seiten einer vertikalen Mittelebene (P) der Antriebseinheit (151) angeordnet sind, umfassen, dass das vordere Befestigungssystem (302) eine vordere Stange (308) umfasst, die durch einen ersten Verbindungspunkt (310a) an der Mittelebene (P) an dem Gehäuse (154) und durch einen zweiten Verbindungspunkt (310b) an der Mittelebene (P) an dem Schutzzylinder (182) gelenkig befestigt ist, und dass jedes seitliche Befestigungssystem (304) eine seitliche Stange (312) umfasst, die durch einen ersten Verbindungspunkt (314a) an dem Schutzzylinder (182) und durch zwei zweite Verbindungspunkte (314b-c) an dem Gehäuse (154) gelenkig befestigt ist.

2. Antriebseinheit (151) für ein Luftfahrzeug (100), umfassend:
- einen Rahmen (180),
- ein Motorisierungssystem (150), das an dem Rahmen (180) befestigt ist und einen Kern (152) aufweist, der in einem Gehäuse (154) eingeschlossen ist und eine Brennkammer (158) und eine Turbine (160), die über um eine Längsachse (X) drehende Schaufeln (161) verfügt, umfasst,
- eine Versorgungsleitung (170), die dazu bestimmt ist, Wasserstoff bis zu der Brennkammer (158) zu leiten, wobei sich die Versorgungsleitung (170) außerhalb des Gehäuses (154) gegenüber der Turbine (160) schlängelt, bevor sie durch das Gehäuse (154) hindurch in die Brennkammer (158) eintritt,
wobei die Antriebseinheit (151) **dadurch gekennzeichnet ist, dass** sie ferner einen Schutzzylinder (182) umfasst, der an dem Rahmen (180) durch Befestigungsmittel (584) befestigt ist und um das Gehäuse (154) herum und zwischen der Versorgungsleitung (170) und der Turbine (160) angeordnet ist, dass die Befestigungsmittel (584) ein vorderes Befestigungssystem (502), das an dem vorderen Teil (506) des Schutzzylinders (182) angeordnet ist, und zwei seitliche Befestigungssysteme (504), die zu beiden Seiten einer vertikalen Mittelebene (P) der Antriebseinheit (151) angeordnet sind, umfassen, dass das vordere Befestigungssystem (502) eine vordere Stange (508) umfasst, die durch einen ersten Verbindungspunkt (510a) an der Mittelebene (P) an dem Rahmen (180) und durch einen zweiten Verbindungspunkt (510b) an der Mittelebene (P) an dem Schutzzylinder (182) gelenkig befestigt ist, und dass jedes seitliche Befestigungssystem (504) eine seitliche Stange (512) umfasst, die durch einen ersten Verbindungspunkt (514a) an dem Rahmen (180) und durch zwei zweite Verbindungspunkte (514b-c) an dem Schutzzylinder (182) gelenkig befestigt ist.

3. Antriebseinheit (151) für ein Luftfahrzeug (100) nach einem der Ansprüche 1 oder 2, **dadurch gekennzeichnet, dass** der Schutzzylinder (182) aus mindestens zwei Hohlzylinderabschnitten (902, 904a-c) besteht, die durch Verbindungssysteme (906) aneinander befestigt sind, dass der Schutzzylinder (182) aus einem oberen Halbzylinder (902) und aus mehreren unteren Halbzylindern (904a-c), die durch Verbindungssysteme (906) an dem oberen Halbzylinder (902) befestigt sind, besteht, und dass zwei benachbarte untere Halbzylinder (904a-c) parallel zu der Längsachse (X) voneinander beabstandet sind.

4. Antriebseinheit (151) nach einem der Ansprüche 1 bis 3, **dadurch gekennzeichnet, dass** ein vorderes Ende des Schutzzylinders (182) senkrecht zu der Längsachse (X) mindestens im Bereich der Schaufeln (161) der Turbine (160), die sich am weitesten vorne befinden, positioniert ist, und dass das hintere Ende des Schutzzylinders (182) senkrecht zu der Längsachse (X) mindestens im Bereich der Schaufeln (161) der Turbine (160), die sich am weitesten hinten befinden, positioniert ist.

5. Antriebseinheit (151) nach Anspruch 4, **dadurch gekennzeichnet, dass** sich der Schutzzylinder (182) über die Schaufeln (161) der Turbine (160), die sich am weitesten vorne befinden, nach vorne hinaus und über die Schaufeln (161) der Turbine (160), die sich am weitesten hinten befinden, nach hinten hinaus erstreckt.

6. Luftfahrzeug (100), das eine Tragfläche (104), einen Wasserstofftank (172) und mindestens eine Antriebseinheit (151) nach einem der vorhergehenden Ansprüche umfasst, wobei der Rahmen (180) an der Tragfläche (104) befestigt ist und wobei die Versorgungsleitung (170) mit dem Wasserstofftank (172) fluidisch verbunden ist.

## Claims

1. Powerplant (151) for an aircraft (100) comprising:
- a frame (180),
- a propulsion system (150) fastened to the frame (180) and comprising a core (152) enclosed in a casing (154) and comprising a combustion chamber (158) and a turbine (160) provided with blades (161) rotating about a longitudinal axis (X),
- a supply pipe (170) for conveying dihydrogen to the combustion chamber (158), in which the supply pipe (170) snakes outside the casing (154) running along the turbine (160) before dropping down into the combustion chamber (158) through the casing (154),
said powerplant (151) being **characterized in that** it further comprises a protective cylinder (182) fastened to the casing (154) by fastening means (384) and positioned around the casing (154) and between the supply pipe (170) and the turbine (160), **in that** the fastening means (384) comprise a front fastening system (302) arranged at the level of a front part (306) of the protective cylinder (182) and two lateral fastening systems (304) positioned on either side of a vertical mid-plane (P) of the powerplant (151), **in that** the front fastening system (302) comprises a front rod (308) hingedly fastened by a first connection point (310a) to the casing (154) at the level of the mid-plane (P) and by a second connection point (310b) to the protective cylinder (182) at the level of the mid-plane (P), and **in that** each lateral fastening system (304) comprises a lateral rod (312) hingedly fastened by a first connection point (314a) to the protective cylinder (182) and by two second connection points (314a-c) to the casing (154).

2. Powerplant (151) for an aircraft (100) comprising:
- a frame (180),
- a propulsion system (150) fastened to the frame (180) and comprising a core (152) enclosed in a casing (154) and comprising a combustion chamber (158) and a turbine (160) provided with blades (161) rotating about a longitudinal axis (X), and
- a supply pipe (170) for conveying dihydrogen to the combustion chamber (158), in which the supply pipe (170) snakes outside the casing (154) running along the turbine (160) before dropping down into the combustion chamber (158) through the casing (154),
said powerplant (151) being **characterized in that** it further comprises a protective cylinder (182) fastened to the frame (180) by fastening means (584) and positioned around the casing (154) and between the supply pipe (170) and the turbine (160), **in that** the fastening means (584) comprise a front fastening system (502) arranged at the level of a front part (506) of the protective cylinder (182) and two lateral fastening systems (504) positioned on either side of a vertical mid-plane (P) of the powerplant (151), **in that** the front fastening system (502) comprises a front rod (508) hingedly fastened by a first connection point (510a) to the frame (180) at the level of the mid-plane (P) and by a second connection point (510b) to the protective cylinder (182) at the level of the mid-plane (P), and **in that** each lateral fastening system (504) comprises a lateral rod (512) hingedly fastened by a first connection point (514a) to the frame (180) and by two second connection points (514b-c) to the protective cylinder (182)

3. Powerplant (151) according to one of Claims 1 or 2, **characterized in that** the protective cylinder (182) consists of at least two hollow cylinder portions (902, 904a-c) fixed to each other by securing systems (906), **in that** the protective cylinder (182) consists of an upper half-cylinder (902) and several half-cylinderslower cylinders (904a-c) fixed to the upper half cylinder (902) by means of securing systems (906) and **in that** two adjacent lower half cylinders (904a-c) are spaced apart from each other parallel to the longitudinal axis (X).

4. Powerplant (151) according to one of Claims 1 to 3, **characterized in that** a front end of the protective cylinder (182) is positioned, perpendicular to the longitudinal axis (X), at least at the foremost blades (161) of the turbine (160), and the rear end of the protective cylinder (182) is positioned, perpendicular to the longitudinal axis (X), at least at the rearmost blades (161) of the turbine (160).

5. Powerplant (151) according to Claim 4, wherein the protective cylinder (182) extends in front of the foremost blades (161) of the turbine (160) and behind the rearmost blades (161) of the turbine (160).

6. Aircraft (100) comprising a wing (104), a dihydrogen tank (172) and at least one powerplant (151) according to one of the preceding claims, in which the frame (180) is fastened to the wing (104) and in which the supply pipe (170) is fluidly connected to the dihydrogen tank (172).
